# DEMANDE DE BREVET EUROPEEN

(11) **EP 4 764 718 A1**
(43) Date de publication de la demande: **24.06.2026**
(21) Numéro de dépôt: 25212262.7
(22) Date de dépôt: 30.10.2025
(51) Int. Cl.: G04B 15/14, G04B 17/06, G04B 19/12, G04B 45/00, G04C 10/02

(54) **COMPOSANT HORLOGER COLORÉ PAR EFFET INTERFÉRENTIEL**

(30) Priorité: 19.12.2024 EP 24221464
(71) Demandeur: Nivarox-FAR S.A., 2400 Le Locle (CH)
(72) Inventeur: BAILAT, Julien, 2503 Bienne (CH); CUSIN, Pierre, 1423 Villars-Burquin (CH)
(74) Mandataire: ICB SA

(57) **Abrégé**

L'invention concerne un composant horloger comprenant un substrat (2), une première couche interférentielle (4) en contact direct ou indirect avec le substrat (2) et une deuxième couche interférentielle (3) recouvrant la première couche interférentielle (4), ladite première couche interférentielle (4) ayant pour caractéristiques qu'elle a une épaisseur comprise 3 nm et 250 nm et qu'elle est réalisée dans un premier matériau transparent au spectre lumineux dans le domaine du visible entre 380 nm et 780 nm, avec ledit premier matériau ayant sur l'ensemble dudit domaine visible un indice de réfraction n inférieur ou égal à 2, ladite deuxième couche interférentielle (3) ayant pour caractéristiques qu'elle a une épaisseur comprise entre 3 nm et 80 nm et qu'elle est réalisée dans un deuxième matériau ayant un indice de réfraction n et un coefficient d'absorption k atteignant respectivement une valeur supérieure ou égale à 3 et supérieure ou égale à 0,5, sur au moins une partie dudit domaine visible.

## Description

### Domaine technique de l'invention

L'invention concerne un composé horloger coloré par effet interférentiel et en particulier un spiral coloré par effet interférentiel.

### Arrière-plan technologique

Traditionnellement, certains spiraux d'horlogerie en alliage métallique reçoivent un traitement de bleuissage pour améliorer l'esthétique et la résistance à la corrosion. Avec l'avènement des spiraux en silicium comportant une couche externe d'oxyde de silicium leur conférant les propriétés mécaniques adéquates permettant de compenser en température la marche des montres, les spiraux bleus sont passés au second plan. En effet, la priorité a été donnée à la fonctionnalité du composant spiral, avant son esthétique. Ainsi, à leur début, les spiraux comportaient la seule couche d'oxyde de silicium, dite de compensation en température, avec une gamme d'épaisseur supérieure au micron, donnant aux spiraux une teinte grisée. Ensuite, à la fois pour pallier les effets électro-statiques et l'influence de l'humidité, les spiraux se sont vus revêtir d'un couche métallique donnant son apparence métallique aux spiraux.

Du document US 2022/0004149, on connaît un dispositif photovoltaïque de couleur noire. Les cellules solaires classiques à base de silicium amorphe en couche mince présentent une couleur rougeâtre proche de celle de l'aubergine, car elles réfléchissent la lumière dont la longueur d'onde est supérieure à environ 650 nm. Cette couleur est souvent jugée inesthétique et donc indésirable dans le domaine horloger en particulier pour des cadrans. Pour résoudre ce problème, il est proposé dans ce document un dispositif photovoltaïque comprenant une couche de contact avant électriquement conductrice; une couche de contact arrière électriquement conductrice, la couche de contact arrière étant destinée à être située plus loin d'une source de lumière incidente que la couche de contact avant; et une jonction PIN à base de semi-conducteur comportant une couche de silicium intrinsèque sensiblement amorphe prise en sandwich entre une couche de semi-conducteur dopée de type P et une couche de semi-conducteur dopée de type N. Selon cette invention, la couche de la jonction PIN située le plus près de la couche de contact arrière est une couche d'alliage silicium-germanium comprenant au moins 2 % en moles de germanium. L'alliage silicium-germanium permet d'absorber la lumière visible dans la gamme des longueurs d'onde rouges, c'est-à-dire dans les gammes de longueurs d'onde normalement transmises par les dispositifs à base de silicium amorphe. Il en résulte une couleur noire profonde pour le dispositif photovoltaïque, compensant la couleur rouge, aubergine ou violette typique des dispositifs photovoltaïques en silicium amorphe.

Pour colorer la face visible du spiral, il a été proposé dans le document EP 3 608 728 un procédé de coloration par effet interférentiel. Le procédé consiste à ajuster l'épaisseur de la couche d'oxyde de silicium sur la face visible à une valeur inférieure à 1 µm de manière à obtenir différentes couleurs selon l'épaisseur de la couche. De manière à garantir la compensation thermique nécessitant une épaisseur de la couche de SiO₂ supérieure à 1 µm, seule la face visible est colorée. Cette méthode s'avère relativement complexe à mettre en œuvre pour faire varier l'épaisseur de la couche de SiO₂ selon la face et présente pour désavantage que toutes les faces ne peuvent pas être colorées. Elle présente pour autre désavantage que la couleur observée varie selon l'angle d'observation.

### Résumé de l'invention

La présente invention vise à proposer un autre moyen de coloration, simple à mettre en œuvre et permettant une coloration de toutes les faces du spiral sans influence marquée de l'angle d'observation.

À cet effet, il est proposé de déposer sur toutes les faces ou du moins sur les faces souhaitées du spiral et, de manière générale du composant horloger, deux couches interférentielles ayant des propriétés optiques différentes.

Plus précisément, la présente invention se rapporte à un composant horloger comprenant un substrat, une première couche interférentielle en contact direct ou indirect avec le substrat et une deuxième couche interférentielle recouvrant la première couche interférentielle avec ladite deuxième couche interférentielle destinée à être orientée en direction d'une source de lumière incidente, ladite première couche interférentielle ayant pour caractéristiques qu'elle a une épaisseur comprise 3 nm et 250 nm et qu'elle est réalisée dans un premier matériau transparent au spectre lumineux dans le domaine du visible entre 380 nm et 780 nm, avec ledit premier matériau ayant sur l'ensemble dudit domaine visible un indice de réfraction n inférieur ou égal à 2, ladite deuxième couche interférentielle ayant pour caractéristiques qu'elle a une épaisseur comprise entre 3 nm et 80 nm et qu'elle est réalisée dans un deuxième matériau ayant un indice de réfraction n et un coefficient d'absorption k atteignant respectivement une valeur supérieure ou égale à 3 et supérieure ou égale à 0,5, sur au moins une partie dudit domaine visible.

L'ajout de cette deuxième couche interférentielle absorbante à haut indice de réfraction sur une première couche interférentielle à faible indice de réfraction permet d'obtenir des couleurs éclatantes tout en gardant un système optique relativement simple. En outre, la deuxième couche absorbante reste une couche interférentielle tout en offrant des propriétés intéressantes, notamment un spectre de réflexion qui varie peu en fonction de l'angle d'observation. Ensuite, en fonction de l'épaisseur de chacune des couches interférentielles, une large variété de couleurs peut être obtenue.

Typiquement pour un spiral, la première couche interférentielle est une couche de SiO₂ et la deuxième couche interférentielle est une couche de Si amorphe. La deuxième couche en Si amorphe présente pour autre avantage de ne pas absorber l'eau. Elle pourrait dès lors agir comme barrière d'humidité.

Cette deuxième couche peut en outre être dopée, par exemple, au bore ou au phosphore afin de produire une couche légèrement conductrice, respectivement de type p ou n, cette propriété étant intéressante pour éviter que la surface ne se charge.

### Brève description des figures

La figure 1 est une représentation en perspective d'un ressort spiral selon l'invention.
La figure 2 est une section transversale d'une spire du ressort spiral de la figure 1.
La figure 3 représente schématiquement le chemin optique de la lumière incidente au travers des couches interférentielles.
La figure 4 représente la variation de l'indice de réfraction n et du coefficient d'absorption k du silicium amorphe en fonction de la longueur d'onde.

### Description détaillée de l'invention

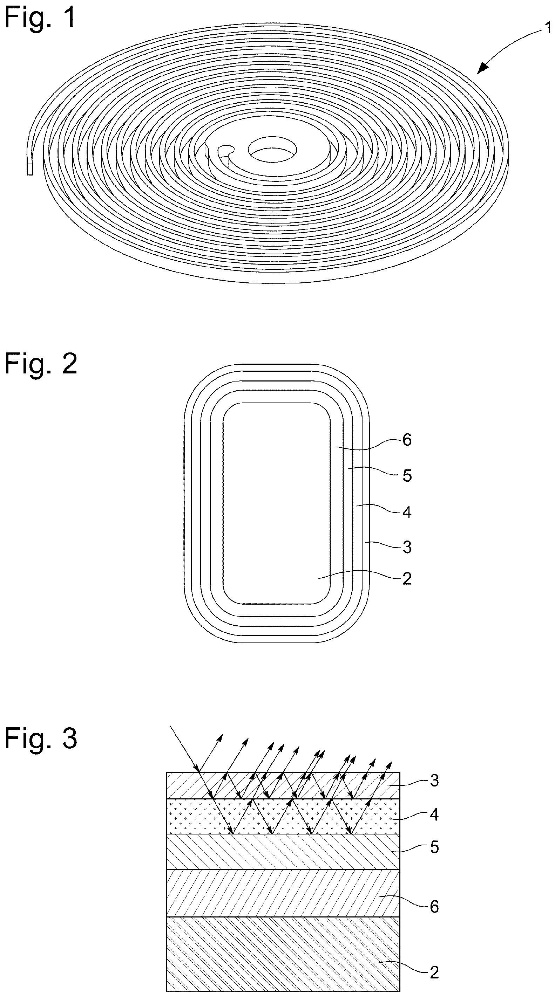

L'invention concerne un composant horloger coloré par effet interférentiel. Le composant horloger peut être un composant horloger d'habillage tel que par exemple un cadran, ou du mouvement. Pour un composant du mouvement, il peut, par exemple, s'agir d'un spiral, d'une roue d'échappement ou d'une ancre. L'invention est ci-après plus spécifiquement décrite pour un spiral 1 tel que représenté à la figure 1.

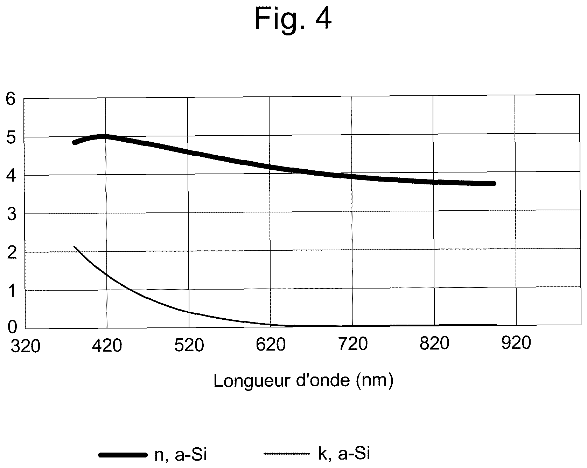

Le composant horloger comporte un substrat 2 recouvert en tout ou partie de deux couches interférentielles 4 et 3. Une première couche interférentielle 4 est en contact direct ou indirect avec le substrat 2. Une deuxième couche interférentielle 3 recouvre la première couche 4 et est destinée à recevoir la lumière incidente. La deuxième couche 3 est réalisée dans un matériau à haut indice de réfraction n et à haut coefficient d'absorption k dans le domaine du visible entre 380 nm et 780 nm. Cette couche 3 a une épaisseur comprise entre 3 nm et 80 nm selon la couleur interférentielle souhaitée. Les matériaux choisis pour cette couche présentent généralement dans le domaine visible un indice n et un coefficient k variables en fonction de la longueur d'onde. À titre d'exemple, la figure 4 représente la variation de l'indice de réfraction n et du coefficient d'absorption k du silicium amorphe en fonction de la longueur d'onde. Selon l'invention, les critères de haut indice n et de haut coefficient k doivent être remplis sur au moins une partie de la gamme du domaine visible entre 380 nm - 780 nm et pas nécessairement sur l'ensemble de la gamme. On entend par haut indice de réfraction n, un indice n ayant sur au moins une partie de la gamme 380 nm - 780 nm une valeur supérieure ou égale à 3, voire supérieure ou égale à 4. Dans l'exemple de la figure 4, on voit que l'indice n est supérieur à 4 pour la gamme 380 nm - 720 nm et supérieur à 3 sur toute la gamme 380 nm - 780 nm. On entend par haut coefficient d'absorption k, un coefficient k ayant sur au moins une partie de la gamme 380 nm - 780 nm une valeur supérieure ou égale à 0,5, voire supérieure ou égale à 1. Dans l'exemple de la figure 4, on voit que le coefficient k est supérieur à 0,5 en dessous de 500 nm et supérieur à 1 pour une longueur d'onde en dessous de 440 nm.

La deuxième couche interférentielle 3 peut par exemple être une couche de silicium amorphe ou de germanium amorphe ou un de leurs alliages, le silicium ou le germanium pouvant être alliés avec du carbone ou de l'hydrogène à titre d'exemple. Selon l'invention, la deuxième couche interférentielle peut être dopée au bore ou au phosphore afin de produire une couche légèrement conductrice, respectivement de type p ou n. Préférentiellement, la concentration en dopants de type P ou N est supérieure ou égale à 10¹⁷ atomes par cm³. Avantageusement, la couche dopée est déposée par PECVD (Plasma-Enhanced Chemical Vapor Deposition en anglais).

Le matériau à haut indice n et haut coefficient k est déposé en contact direct sur un autre matériau présentant un indice n inférieur afin de favoriser la réflexion à l'interface entre les deux matériaux. Il s'agit de la première couche interférentielle 4 qui a une épaisseur typiquement comprise entre 3 nm et 250 nm selon la couleur souhaitée en combinaison avec la deuxième couche. Le matériau de cette première couche 4 a un indice de réfraction n atteignant une valeur maximale de 2, voire de 1,5 dans la gamme 380 nm - 780 nm. De nouveau, l'indice de réfraction n peut varier dans cette gamme. On entend par valeur maximale de 2, voire de 1,5 que sur toute la gamme 380 nm - 780 nm, l'indice n'excède pas cette valeur. Cette première couche 4 a également pour caractéristique d'être transparente dans le domaine du visible entre 380 nm et 780 nm. La première couche interférentielle 4 peut, par exemple, être une couche d'oxydes telle qu'une couche d'oxydes de silicium, de zinc, d'étain, de titane ou encore une couche de nitrures telle qu'une couche de nitrures de silicium.

Les première et deuxième couches peuvent être déposées par PECVD (Plasma-Enhanced Chemical Vapor Deposition en anglais), ALD (atomic layer deposition en anglais), PVD (physical vapor deposition), etc.

La première couche 4 est en contact direct ou indirect avec le substrat 2 qui peut être de tout type de matériau : métallique, céramique (carbures, nitrures, oxydes), etc... Dans le cas d'un contact indirect, une ou plusieurs couches intermédiaires 5,6 sont déposées entre le substrat 2 et la première couche 4 (figures 2 et 3). Préférentiellement, l'indice de réfraction du substrat en contact direct avec la première couche ou de la couche intermédiaire en contact direct avec la première couche est différent de l'indice de réfraction de la première couche. Ainsi, l'indice de réfraction du substrat en contact direct avec la première couche ou de la couche intermédiaire en contact direct avec la première couche est de préférence supérieur à 2. Plus préférentiellement, il est supérieur ou égal à 2,5.

Pour un spiral 1 représenté aux figures 1 à 3, le substrat 2 est en silicium cristallin. Il est recouvert d'une première couche intermédiaire 6 en SiO₂ de compensation thermique qui a une épaisseur supérieure au micron, ensuite d'une couche métallique 5, par exemple en chrome, titane, tantale ou un de leurs alliages, ayant une épaisseur comprise entre 5 et 50 nm afin d'évacuer les charges et empêcher l'absorption d'eau. Cette couche métallique 5 est ensuite recouverte des deux couches interférentielles 4 et 3 avec la première couche 4 en SiO₂ et la deuxième couche 3 en Si amorphe.

Pour un composant d'habillage tel qu'un cadran, ce dernier comporte un substrat en silicium cristallin revêtu successivement avec la première couche interférentielle en SiO₂ et la deuxième couche interférentielle en Si amorphe. Selon une variante, il s'agit d'un cadran comprenant une cellule solaire dont le substrat est constitué du Si cristallin revêtu successivement avec la première couche interférentielle en oxyde ou nitrure de silicium (SiO₂ ou Si₃N₄) et avec la deuxième couche interférentielle en Si amorphe.

La figure 3 schématise les chemins optiques de la lumière incidente réfléchie à l'interface entre la première couche interférentielle 4 et la deuxième couche interférentielle 3 et entre la deuxième couche intermédiaire 5 et la première couche interférentielle 4, avec les jeux de transmission au sein deux couches interférentielle 3,4 permettant d'obtenir une couleur interférentielle variable selon leur épaisseur. À titre d'exemple, des couleurs bleues vives sont obtenues pour une épaisseur de la première couche de 60 nm et une épaisseur de la deuxième couche de 5 nm. Des couleurs plus violettes sont obtenues pour une épaisseur de la première couche 4 réduite à 30-50 nm. Des couleurs plus pastelles sont obtenues avec une épaisseur croissante des deux couches.

## Revendications

1. Composant horloger comprenant un substrat (2), une première couche interférentielle (4) en contact direct ou indirect avec le substrat (2) et une deuxième couche interférentielle (3) recouvrant la première couche interférentielle (4) avec ladite deuxième couche interférentielle (3) destinée à être orientée en direction d'une source de lumière incidente, ladite première couche interférentielle (4) ayant pour caractéristiques qu'elle a une épaisseur comprise 3 nm et 250 nm et qu'elle est réalisée dans un premier matériau transparent au spectre lumineux dans le domaine du visible entre 380 nm et 780 nm, avec ledit premier matériau ayant sur l'ensemble dudit domaine visible un indice de réfraction n inférieur ou égal à 2, ladite deuxième couche interférentielle (3) ayant pour caractéristiques qu'elle a une épaisseur comprise entre 3 nm et 80 nm et qu'elle est réalisée dans un deuxième matériau ayant un indice de réfraction n et un coefficient d'absorption k atteignant respectivement une valeur supérieure ou égale à 3 et supérieure ou égale à 0,5, sur au moins une partie dudit domaine visible.

2. Composant horloger selon la revendication 1, **caractérisé en ce que** l'indice de réfraction n et le coefficient d'absorption k de la deuxième couche interférentielle (3) atteignent respectivement une valeur supérieure ou égale à 4 et supérieure ou égale à 1, sur au moins une partie dudit domaine visible.

3. Composant horloger selon l'une des revendications précédentes, **caractérisé en ce que** la première couche interférentielle (4) a sur l'ensemble dudit domaine visible un indice de réfraction n inférieur ou égal à 1.5.

4. Composant horloger selon l'une des revendications précédentes, **caractérisé en ce que** la première couche interférentielle (4) est une couche d'un oxyde ou d'un nitrure.

5. Composant horloger selon la revendication précédente, **caractérisé en ce que** la première couche interférentielle (4) est une couche de SiO₂ ou de Si₃N₄.

6. Composant horloger selon l'une des revendications précédentes, **caractérisé en ce que** la deuxième couche interférentielle (3) est une couche de Si amorphe, de Ge amorphe ou d'un de leurs alliages.

7. Composant horloger selon l'une des revendications précédentes, **caractérisé en ce qu'**une ou plusieurs couches intermédiaires sont déposées entre le substrat (2) et la première couche interférentielle (4).

8. Composant horloger selon la revendication précédente, **caractérisé en ce que** le substrat (2) en contact direct avec la première couche interférentielle (4) ou la couche intermédiaire en contact direct avec la première couche interférentielle (4) sont réalisés dans un troisième matériau ayant sur l'ensemble dudit domaine visible un indice de réfraction n supérieur à 2, de préférence supérieur ou égal à 2,5.

9. Composant horloger selon l'une des revendications précédentes, **caractérisé en ce que** la deuxième couche interférentielle (3) présente une concentration en dopants de type P ou N.

10. Composant horloger selon la revendication précédente, **caractérisé en ce que** la concentration en dopants de type P ou N est supérieure ou égale à 10¹⁷ atomes par cm³.

11. Composant horloger selon la revendication 7, **caractérisé en ce que** ledit composant horloger est un spiral (1) avec le substrat (2) en Si cristallin revêtu successivement avec une première couche intermédiaire (6) en SiO₂, une deuxième couche intermédiaire (5) métallique, la première couche interférentielle (4) en SiO₂ et la deuxième couche interférentielle (3) en Si amorphe.

12. Composant horloger selon l'une des revendications 1 à 10, **caractérisé en ce que** ledit composant horloger est un cadran avec le substrat (2) en Si cristallin revêtu successivement avec la première couche interférentielle (4) en SiO₂ et la deuxième couche interférentielle (3) en Si amorphe.

13. Composant horloger selon l'une des revendications 1 à 10, **caractérisé en ce que** ledit composant horloger est un cadran composé d'une cellule solaire comportant le substrat (2) en Si cristallin revêtu successivement avec la première couche interférentielle (4) en SiO₂ ou en Si₃N₄ et la deuxième couche interférentielle (3) en Si amorphe.
